# FASCICULE DE BREVET EUROPEEN

(11) **EP 2 503 641 B1**
(45) Date de publication et mention de la délivrance du brevet: **28.08.2013**
(21) Numéro de dépôt: 12159584.7
(22) Date de dépôt: 15.03.2012
(51) Int. Cl.: H01Q 15/14, H01Q 3/01, G02B 26/08

(54) **Système d'actionnement pour réflecteur d'antenne à surface réfléchissante déformable**
Betätigungssystem für Antennenreflektor mit einer deformierbaren reflektierenden Fläche
Actuating system for antenna reflector with deformable reflecting surface

(30) Priorité: 24.03.2011 FR 1100887
(43) Date de publication de la demande: 26.09.2012
(73) Titulaire: Thales, 92200 Neuilly Sur Seine (FR)
(72) Inventeur: Baudasse, Yannick, 06130 GRASSE (FR); Vezain, Stéphane, 06210 MANDELIEU (FR)
(74) Mandataire: Collet, Alain

(56) Documents cités:
- WO-A1-2009/092901
- FR-A1- 2 678 111

## Description

L'invention se situe dans le domaine des réflecteurs d'antenne à surface réfléchissante déformable. Elle concerne un système d'actionnement pouvant équiper un tel réflecteur.

Un satellite de télécommunications comporte au moins une antenne permettant l'émission et la réception de signaux électromagnétiques. Chaque antenne comporte un réflecteur dont la forme et l'orientation déterminent la zone terrestre couverte par l'antenne. Dans le but de couvrir plusieurs zones terrestres distinctes ou une zone terrestre plus étendue que celle pouvant être couverte par une seule antenne, un satellite peut comporter plusieurs antennes, chaque antenne couvrant une zone terrestre spécifique. Cependant, le nombre d'antennes pouvant équiper un satellite est limité par l'espace disponible sous la coiffe du lanceur du satellite. Par ailleurs, il peut être souhaitable de pouvoir modifier la zone terrestre couverte par une antenne. Une solution pour répondre à ce double problème est de concevoir un réflecteur d'antenne dont la surface réfléchissante est déformable.

On connaît, par exemple du document FR 2 678 111, des réflecteurs d'antenne à surface réfléchissante déformable comportant une membrane flexible et un système d'actionnement comprenant une pluralité d'éléments poussoirs. La membrane flexible peut être traitée afin de former une surface réfléchissante. Chaque élément poussoir comprend une tige et un actionneur du type moteur pas à pas ou moteur piézoélectrique. Chaque tige vient au contact d'un point de la membrane flexible et peut être entraînée en translation par l'actionneur de manière à déformer localement la membrane flexible. L'ensemble des éléments poussoirs permet globalement de donner une forme particulière à la membrane flexible. La déformation de la membrane flexible étant réalisée de manière discrète, il est souhaitable de multiplier les éléments poussoirs pour permettre de former une surface réfléchissante la plus lisse et la plus régulière possible. Cependant, la multiplication des éléments poussoirs implique une masse, un encombrement et un coût élevés pour le système d'actionnement. De plus, chaque actionneur doit être alimenté en énergie électrique et commandé individuellement. Il en résulte une interface électrique complexe à mettre en oeuvre. Dans le cas où les actionneurs sont des moteurs piézoélectriques, ils doivent être alimentés en permanence, même lorsqu'ils ne doivent pas actionner la tige.

Par ailleurs, on connaît du document WO 2009/092901 A1 un miroir déformable comprenant une membrane déformable et des actionneurs magnétiques. Chaque actionneur magnétique comprend une bobine solidaire de la structure et un aimant solidaire de la membrane.

Un but de l'invention est notamment de pallier tout ou partie des inconvénients précités en proposant un système d'actionnement pour un réflecteur d'antenne à surface réfléchissante déformable qui soit simple, économique, léger, et qui permette une déformation de la surface réfléchissante en de nombreux points. A cet effet, l'invention a pour objet un système d'actionnement pouvant équiper un réflecteur comportant un châssis et une membrane flexible fixée au châssis de manière à pouvoir être déformée. Selon l'invention, le système d'actionnement comporte :
■ un support apte à être fixé au châssis du réflecteur,
■ un ensemble de dispositifs de déformation, chaque dispositif de déformation comportant un élément poussoir apte à être entraîné en translation par rapport au support selon un axe, l'élément poussoir comportant une partie apte à venir au contact de la membrane flexible en un point pour la déformer,
■ un dispositif d'actionnement apte à entraîner en translation l'élément poussoir de l'un des dispositifs de déformation à la fois selon son axe, et
■ un dispositif de sélection apte à déplacer le dispositif d'actionnement vers chacun des dispositifs de déformation de manière à ce que le dispositif d'actionnement puisse entraîner en translation l'élément poussoir du dispositif de déformation sélectionné.

Selon une forme particulière de réalisation, le dispositif d'actionnement est apte à générer un mouvement de rotation par rapport au support selon l'axe, ledit mouvement de rotation transmettant un mouvement de translation à l'élément poussoir au moyen d'un système vis/écrou.

Chaque dispositif de déformation peut alors comporter, en outre :
■ un premier élément rotatif apte à être entraîné en rotation par rapport au support selon un deuxième axe, sensiblement parallèle au premier axe, par le dispositif d'actionnement, et
■ un deuxième élément rotatif lié en rotation selon le premier axe avec l'un des éléments du système vis/écrou et pouvant être entraîné en rotation selon le premier axe par le premier élément rotatif.

Chaque premier élément rotatif peut comporter une première poulie et chaque deuxième élément rotatif peut comporter une deuxième poulie. Chaque dispositif de déformation comporte alors, en outre, une courroie reliant la première poulie à la deuxième poulie. Ce système poulies /courroie permet de disposer les dispositifs de déformation relativement loin les uns des autres.

Toujours selon une forme particulière de réalisation, les premiers éléments rotatifs sont répartis sur le périmètre d'un cercle, le dispositif de sélection comportant un bras support pouvant être entraîné en rotation selon un troisième axe passant par le centre du cercle et orthogonal au plan du cercle, le dispositif d'actionnement étant fixé sur le bras support de manière à pouvoir entraîner en rotation les premiers éléments rotatifs des dispositifs de déformation.

Le dispositif d'actionnement comporte par exemple un moteur apte à entraîner en rotation chaque premier élément rotatif selon son deuxième axe.

Selon une forme particulière de réalisation, le système d'actionnement comporte de plus, pour au moins un dispositif de déformation, un élément élastique dont l'une de ses extrémités est liée en translation selon le premier axe avec la partie de l'élément poussoir apte à venir au contact de la membrane flexible et dont une autre de ses extrémités est liée en translation selon le premier axe avec la membrane flexible, l'élément élastique étant déformable élastiquement selon le premier axe.

Selon cette forme particulière de réalisation, le système d'actionnement peut comporter, pour chaque dispositif de déformation comportant un élément élastique, un deuxième élément élastique dont l'une de ses extrémités est liée en translation selon le premier axe avec le support et dont une autre de ses extrémités est liée en translation selon le premier axe avec la membrane flexible, le deuxième élément élastique étant déformable élastiquement selon le premier axe, la raideur du premier élément élastique selon le premier axe étant inférieure à la raideur du deuxième élément élastique selon le premier axe.

L'invention a également pour objet un réflecteur comportant un châssis, une membrane flexible fixée au châssis de manière à pouvoir être déformée, et un système d'actionnement tel que décrit ci-dessus.

L'invention a notamment pour avantage qu'elle permet au système d'actionnement de ne comporter qu'un seul actionneur pour l'ensemble des points de déformation de la membrane flexible.

L'invention sera mieux comprise et d'autres avantages apparaîtront à la lecture de la description qui va suivre, faite en regard de dessins annexés sur lesquels :
- la figure 1, dans une vue en coupe, un exemple de réflecteur d'antenne parabolique à surface réfléchissante déformable selon l'état de la technique ;
- la figure 2, dans une vue en coupe, un exemple de réflecteur à surface réfléchissante déformable selon l'invention ;
- la figure 3, dans une vue en coupe, un exemple de liaison mécanique entre un dispositif de déformation et la surface réfléchissante.

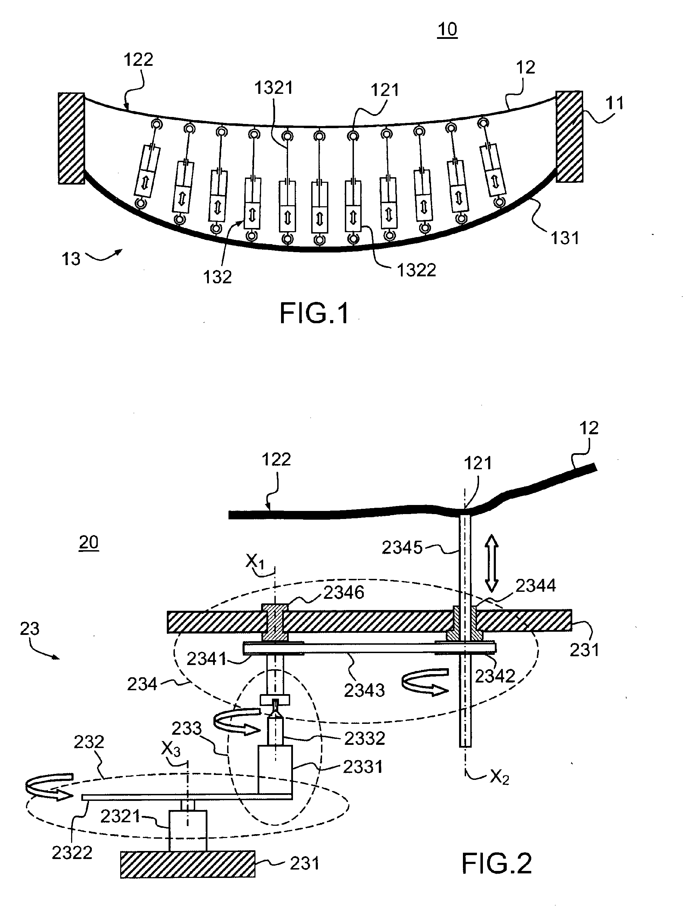

La figure 1 représente, dans une vue en coupe, un exemple de réflecteur d'antenne parabolique à surface réfléchissante déformable selon l'état de la technique. Le réflecteur d'antenne 10 comporte un châssis fixe 11, une membrane flexible 12 et un système d'actionnement 13 permettant de déformer la membrane flexible 12 en différents points, appelés points de déformation 121. La membrane flexible 12 est fixée à sa périphérie au châssis 11. Elle comporte une surface réfléchissante 122 de forme sensiblement parabolique apte à réfléchir des ondes électromagnétiques dans une bande de fréquences prédéterminée, choisie en fonction de l'application visée. La surface réfléchissante 122 est par exemple formée par des particules métalliques déposées sur la surface de la membrane flexible 12. La flexibilité de la membrane 12 peut être obtenue par des articulations ou par un matériau déformable élastiquement. Le matériau de la membrane flexible 12 comprend par exemple de la silicone. Le système d'actionnement 13 comporte un support 131 fixé au châssis 11 sous la membrane flexible 12, c'est-à-dire du côté opposé à la surface réfléchissante 122, et un ensemble d'éléments poussoirs 132. Le système d'actionnement 13 peut comporter environ une centaine d'éléments poussoirs 132 répartis sous la membrane flexible 12. Chaque élément poussoir 132 comprend une tige 1321 et un actionneur 1322 permettant d'entraîner la tige 1321 en translation. Une extrémité libre de chaque tige 1321 vient au contact d'un point de déformation 121 de la membrane flexible 12. Une liaison rotule peut être prévue entre les extrémités libres des tiges 1321 et les points de déformation 121. Les actionneurs 1322 sont fixés au support 131. Ils peuvent être fixés au support 131 par l'intermédiaire de liaisons rotule. Les éléments poussoirs 132 sont représentés sur la figure 1 sous la forme de vérins, auquel cas chaque tige 1321 peut correspondre à la tige du vérin associé. Les éléments poussoirs 132 peuvent être des vérins électriques, des moteurs pas à pas ou des moteurs piézoélectriques. Les actionneurs 1322 peuvent être commandés de manière à déformer la membrane flexible 12 au niveau des points de déformation 121.

La figure 2 représente, dans une vue en coupe, un exemple de réflecteur à surface réfléchissante déformable comportant un système d'actionnement selon l'invention. Le réflecteur peut avoir une forme parabolique ou toute autre forme adaptée à un usage spécifique. Le réflecteur peut équiper une antenne d'un satellite de télécommunications. Il peut également être utilisé dans un système optique comme miroir. Le réflecteur 20 se distingue essentiellement du réflecteur 10 décrit en référence à la figure 1 par son système d'actionnement. Le réflecteur 20 comporte un châssis fixe, non représenté, une membrane flexible 12 et un système d'actionnement 23 permettant de déformer la membrane flexible 12 en différents points de déformation 121. Le système d'actionnement 23 comporte une structure fixe 231 formant support, un dispositif de sélection 232, un dispositif d'actionnement 233 et un ensemble de dispositifs de déformation 234. Sur la figure 2, un seul dispositif de déformation 234 est représenté pour des raisons de lisibilité. L'invention présente néanmoins un intérêt particulier lorsque le système d'actionnement comprend plusieurs dispositifs de déformation, pouvant par exemple aller jusqu'à plusieurs centaines. Chaque dispositif de déformation 234 comprend par exemple une première poulie 2341, une deuxième poulie 2342, une courroie 2343 reliant les poulies 2341 et 2342, un écrou 2344 et une tige filetée 2345 coopérant avec l'écrou 2344. La première poulie 2341 est en liaison pivot par rapport à la structure fixe 231 selon un premier axe X₁. La liaison pivot est par exemple réalisée au moyen d'un palier 2346. La deuxième poulie 2342 est en liaison pivot par rapport à la structure fixe 231 selon un deuxième axe X₂, sensiblement parallèle au premier axe X₁. Selon un premier mode de réalisation, la deuxième poulie 2342 est liée en rotation avec l'écrou 2344, lequel est en liaison pivot selon l'axe X₂ par rapport à la structure fixe 231. L'écrou 2344 forme par exemple un palier pour la deuxième poulie 2342. Une extrémité de la tige filetée 2345 est fixée en un point de déformation 121 de la membrane flexible 12 de manière à être liée en translation et en rotation selon l'axe X₂ avec la membrane flexible 12. Selon un deuxième mode de réalisation, la deuxième poulie 2342 est liée en rotation avec la tige filetée 2345. L'écrou 2344 est lié en rotation selon l'axe X₂ avec la structure fixe 231. L'extrémité de la tige filetée 2345 est fixée au point de déformation 121 de manière à être liée en translation et libre en rotation selon l'axe X₂ par rapport à la membrane flexible 12. L'extrémité de la tige filetée 2345 est par exemple reliée au point de déformation 121 par une liaison pivot selon l'axe X₂. Dans chaque mode de réalisation, une rotation de la deuxième poulie 2342 selon l'axe X₂ entraîne une translation de la tige filetée 2345 selon cet axe dans une direction ou dans l'autre, selon le sens de rotation de la deuxième poulie 2342. La membrane flexible 12 est ainsi déformée localement.

Le dispositif d'actionnement 233 permet d'entraîner en rotation la première poulie 2341 de chaque dispositif de déformation 234 et, par l'intermédiaire des courroies 2343, les deuxièmes poulies 2342. Il comporte un actionneur 2331, tel qu'un moteur pas à pas ou un moteur piézoélectrique, et une pièce d'entraînement 2332 pouvant être entraînée en rotation par l'actionneur 2331 selon un axe sensiblement parallèle à l'axe X₁. La pièce d'entraînement 2332 est configurée pour pouvoir venir s'accoupler avec chaque première poulie 2341. A titre d'exemple, la pièce d'entraînement 2332 comporte un embout de type tournevis plat, et les premières poulies 2341 comportent chacune une empreinte apte à recevoir cet embout. Ce type d'embout permet un engagement et un désengagement entre la pièce d'entraînement 2332 et l'empreinte de la première poulie 2341 lors du déplacement en rotation du dispositif d'actionnement 233 par le dispositif de sélection 232, sans nécessiter de mouvement de translation selon l'axe X₁. La pièce d'entrainement 2332 doit alors effectuer un nombre entier de demi-tours.

Le dispositif de sélection 232 permet de déplacer le dispositif d'actionnement 233 vers chacun des dispositifs de déformation 234, de manière à ce que le dispositif d'actionnement 233 puisse entraîner en rotation la première poulie 2341 du dispositif de déformation 234 sélectionné. Selon une forme particulière de réalisation, le dispositif de sélection 232 comporte un moteur électrique 2321 et un bras support 2322. Le moteur électrique 2321 est apte à entraîner en rotation le bras support 2322 selon un troisième axe X₃, sensiblement parallèle aux axes X₁ et X₂. Le dispositif d'actionnement 233 est fixé sur le bras support 2322. Dans cette forme particulière de réalisation, les premières poulies 2341 de chaque dispositif de déformation 234 sont montées sur la structure fixe 231 selon une répartition circulaire. Le dispositif d'actionnement 233 peut ainsi venir en vis-à-vis de chaque poulie 2341 par une rotation du bras support 2322 selon l'axe X₃, et les dispositifs de déformation 234 peuvent être actionnés successivement. Bien que l'emplacement des poulies 2341 soit contraint par le déplacement circulaire du dispositif d'actionnement 233, les deuxièmes poulies 2342 peuvent être réparties librement sur la structure fixe 231 grâce aux courroies 2343.

Le système d'actionnement 23 a été décrit en référence à la figure 2 en considérant des transmissions de mouvements rotatifs entre le dispositif d'actionnement 233 et les différentes tiges filetées 2345 par un système de poulies et de courroies. Néanmoins, les transmissions peuvent également être réalisées par des chaînes ou par des engrenages.

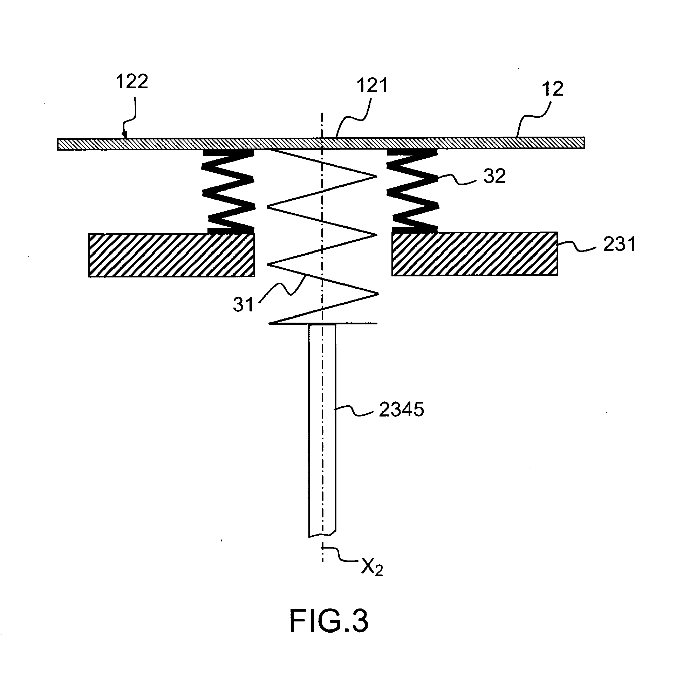

Les liaisons mécaniques entre les extrémités des tiges filetées 2345 et la membrane flexible 12 peuvent être, comme dans les exemples de réalisation représentés sur les figures 1 et 2, des liaisons supprimant le degré de liberté en translation selon l'axe X₂ entre les tiges filetées 2345 et la membrane 12. Il s'agit par exemple de liaisons encastrement ou de liaisons rotule. La figure 3 représente, dans une vue en coupe, un exemple de liaison mécanique pouvant être réalisée entre l'extrémité d'une tige 2345 et la membrane flexible 12. La liaison 30 comporte un premier élément élastique 31 fixé à l'une de ses extrémités à l'extrémité de la tige filetée 2345 et à son autre extrémité au point de déformation 121 de la membrane flexible 12. La liaison 30 peut également comporter un deuxième élément élastique 32 fixé à l'une de ses extrémités à la structure fixe 231 du système d'actionnement 23 et à son autre extrémité à la membrane flexible 12, dans le voisinage du point de déformation 121. Les éléments élastiques 31 et 32 peuvent être déformés élastiquement selon l'axe X₂. Dans l'exemple de réalisation de la figure 3, les éléments élastiques 31 et 32 sont deux ressorts hélicoïdaux coaxiaux. Le diamètre interne du deuxième ressort hélicoïdal 32 est supérieur au diamètre externe du premier ressort hélicoïdal 31 de manière à permettre son libre passage. Chaque élément élastique peut comporter un ou plusieurs ressorts, en série ou en parallèle. Avantageusement, la raideur k₁ du premier élément élastique 31 est sensiblement inférieure à la raideur k₂ du deuxième élément élastique 32. La liaison 30 forme ainsi un système à raideur différentielle ayant pour effet de limiter la déformation de la membrane flexible 12. Plus précisément, pour un déplacement d'une longueur donnée de la tige filetée 2345 selon l'axe X₂, le point de déformation 121 se déplace selon cet axe d'une longueur inférieure. Il est ainsi possible de déformer la membrane flexible 12 avec une plus grande précision. D'autres solutions peuvent être envisagées pour réduire le déplacement des tiges filetées 2345. A titre d'exemple, il est possible d'ajouter, entre une deuxième poulie 2342 et un point de déformation 121, un réducteur par engrenage ou une vis micrométrique, également appelée vis différentielle de Prony.

## Revendications

1. Système d'actionnement pouvant équiper un réflecteur (20) comportant un châssis (11) et une membrane flexible (12) fixée au châssis (11) de manière à pouvoir être déformée, comportant :
■ un support (231) apte à être fixé au châssis (11) du réflecteur (20),
■ un ensemble de dispositifs de déformation (234), chaque dispositif de déformation comportant un élément poussoir (2345) apte à être entraîné en translation par rapport au support (231) selon un axe (X₂), l'élément poussoir (2345) comportant une partie apte à venir au contact de la membrane flexible (12) en un point (121) pour la déformer, et
■ un dispositif d'actionnement (233) apte à entraîner en translation l'élément poussoir (2345) de l'un des dispositifs de déformation (234) à la fois selon son axe (X₂),
le système d'actionnement (23) étant **caractérisé en ce qu'**il comporte :
■ un dispositif de sélection (232) apte à déplacer le dispositif d'actionnement (233) vers chacun des dispositifs de déformation (234) de manière à ce que le dispositif d'actionnement (233) puisse entraîner en translation l'élément poussoir (2345) du dispositif de déformation (234) sélectionné.

2. Système d'actionnement selon la revendication 1, dans lequel le dispositif d'actionnement est apte à générer un mouvement de rotation par rapport au support (231) selon l'axe (X₂), ledit mouvement de rotation transmettant un mouvement de translation à l'élément poussoir (2345) au moyen d'un système vis/écrou (2344, 2345).

3. Système d'actionnement selon la revendication 2, dans lequel chaque dispositif de déformation (234) comporte en outre :
■ un premier élément rotatif (2341) apte à être entraîné en rotation par rapport au support (231) selon un deuxième axe (X₁), sensiblement parallèle au premier axe (X₂), par le dispositif d'actionnement (233), et
■ un deuxième élément rotatif (2342) lié en rotation selon le premier axe (X₂) avec l'un des éléments du système vis/écrou (2344, 2345) et pouvant être entraîné en rotation selon le premier axe (X₂) par le premier élément rotatif (2341).

4. Système d'actionnement selon la revendication 3, dans lequel chaque premier élément rotatif comporte une première poulie (2341) et chaque deuxième élément rotatif comporte une deuxième poulie (2342), chaque dispositif de déformation (234) comportant en outre une courroie (2343) reliant la première poulie (2341) à la deuxième poulie (2342).

5. Système d'actionnement selon l'une des revendications 3 et 4, dans lequel les premiers éléments rotatifs (2341) sont répartis sur le périmètre d'un cercle, le dispositif de sélection (232) comportant un bras support (2322) pouvant être entraîné en rotation selon un troisième axe (X₃) passant par le centre du cercle et orthogonal au plan du cercle, le dispositif d'actionnement (233) étant fixé sur le bras support (2322) de manière à pouvoir entraîner en rotation les premiers éléments rotatifs (2341) des dispositifs de déformation (234).

6. Système d'actionnement selon l'une des revendications 3 à 5, dans lequel le dispositif d'actionnement (233) comporte un moteur (2331) apte à entraîner en rotation chaque premier élément rotatif (2341) selon son deuxième axe (X₁).

7. Système d'actionnement selon l'une des revendications précédentes comportant en outre, pour au moins un dispositif de déformation (234), un élément élastique (31) dont l'une de ses extrémités est liée en translation selon le premier axe (X₂) avec la partie de l'élément poussoir (2345) apte à venir au contact de la membrane flexible (12) et dont une autre de ses extrémités est liée en translation selon le premier axe (X₂) avec la membrane flexible (12), l'élément élastique (31) étant déformable élastiquement selon le premier axe (X₂).

8. Système d'actionnement selon la revendication 7 comportant en outre, pour chaque dispositif de déformation (234) comportant un élément élastique (31), un deuxième élément élastique (32) dont l'une de ses extrémités est liée en translation selon le premier axe (X₂) avec le support (231) et dont une autre de ses extrémités est liée en translation selon le premier axe (X₂) avec la membrane flexible (12), le deuxième élément élastique (32) étant déformable élastiquement selon le premier axe (X₂), la raideur du premier élément élastique (31) selon le premier axe (X₂) étant inférieure à la raideur du deuxième élément élastique (32) selon le premier axe (X₂).

9. Réflecteur comportant un châssis (11), une membrane flexible (12) fixée au châssis (11) de manière à pouvoir être déformée, et un système d'actionnement (23) selon l'une des revendications précédentes.

## Patentansprüche

1. Betätigungssystem, das in einem Reflektor (20) enthalten sein kann, der einen Rahmen (11) und eine flexible Membran (12) umfasst, die so an dem Rahmen (11) befestigt ist, dass sie verformt werden kann, das Folgendes umfasst:
• einen Träger (231), der am Rahmen (11) des Reflektors (20) befestigt sein kann,
• einen Satz Verformungsvorrichtungen (234), wobei jede Verformungsvorrichtung einen Stößel (2345) umfasst, der in Bezug auf den Träger (231) entlang einer Achse (X₂) verschoben werden kann, wobei das Stößelelement (2345) ein Teil aufweist, das mit der flexiblen Membran (12) an einem Punkt (121) in Kontakt kommen kann, um sie zu verformen, und
• eine Betätigungsvorrichtung (233), die das Stößelelement (2345) von einer der Verformungsvorrichtungen (234) gleichzeitig entlang seiner Achse (X₂) verschieben kann,
wobei das Betätigungssystem (23) **dadurch gekennzeichnet ist, dass** es Folgendes umfasst:
• eine Auswahlvorrichtung (232) zum Bewegen der Betätigungsvorrichtung (233) zu jeder der Verformungsvorrichtungen (234), so dass die Betätigungsvorrichtung (233) das Stößelelement (2345) der gewählten Verformungsvorrichtung (234) verschieben kann.

2. Betätigungssystem nach Anspruch 1, bei dem die Betätigungsvorrichtung eine Rotationsbewegung in Bezug auf den Träger (231) entlang der Achse (X₂) erzeugen kann, wobei die Rotationsbewegung eine Translationsbewegung mittels eines Spindel/Mutter-Systems (2344, 2345) auf das Stößelelement (2345) überträgt.

3. Betätigungssystem nach Anspruch 2, bei dem jede Verformungsvorrichtung (234) darüber hinaus Folgendes umfasst:
• ein erstes Rotationselement (2341), das in Bezug auf den Träger (231) um eine zweite Achse (X₁), die im Wesentlichen parallel zur ersten Achse (X₂) ist, von der Betätigungsvorrichtung (233) in Drehung versetzt werden kann, und
• ein zweites Rotationselement (2342), das rotativ um die erste Achse (X₂) mit einem der Spindel/Mutter-Systemelemente (2344, 2345) verbunden ist und von dem ersten Rotationselement (2341) um die erste Achse (X₂) in Drehung versetzt werden kann.

4. Betätigungssystem nach Anspruch 3, bei dem jedes erste Rotationselement eine erste Antriebsscheibe (2341) umfasst und jedes zweite Rotationselement eine zweite Antriebsscheibe (2342) umfasst, wobei jede Verformungsvorrichtung (234) darüber hinaus einen Riemen (2343) umfasst, der die erste Antriebsscheibe (2341) mit der zweiten Antriebsscheibe (2342) verbindet.

5. Betätigungssystem nach einem der Ansprüche 3 und 4, bei dem die ersten Rotationselemente (2341) auf dem Umfang eines Kreises verteilt sind, wobei die Auswahlvorrichtung (232) einen Tragarm (2322) umfasst, der um eine dritte Achse (X₃) in Drehung versetzt werden kann, die durch die Mitte des Kreises und orthogonal zur Ebene des Kreises verläuft, wobei die Betätigungsvorrichtung (233) so an dem Tragarm (2322) befestigt ist, dass sie die ersten Rotationselemente (2341) der Verformungsvorrichtung (234) in Drehung versetzen kann.

6. Betätigungssystem nach einem der Ansprüche 3 bis 5, bei dem die Betätigungsvorrichtung (233) einen Motor (2331) umfasst, der jedes erste Rotationselement (2341) um seine zweite Achse (X₁) in Drehung versetzen kann.

7. Betätigungssystem nach einem der vorherigen Ansprüche, das darüber hinaus für wenigstens eine Verformungsvorrichtung (234) ein elastisches Element (31) umfasst, von dem eines der Enden translational entlang der ersten Achse (X₂) mit dem Teil des Stößelelements (2345) verbunden ist, das mit der flexiblen Membran (12) in Kontakt kommen kann und dessen anderes Ende translational entlang der ersten Achse (X₂) mit der flexiblen Membran (12) verbunden ist, wobei das elastische Element (31) elastisch entlang der ersten Achse (X₂) verformbar ist.

8. Betätigungssystem nach Anspruch 7, das darüber hinaus für jede ein elastisches Element (31) umfassende Verformungsvorrichtung (234) ein zweites elastisches Element (32) umfasst, von dem ein Ende translational entlang der ersten Achse (X₂) mit dem Träger (231) verbunden ist und von dem ein anderes Ende translational entlang der ersten Achse (X₂) mit der flexiblen Membran (12) verbunden ist, wobei das zweite elastische Element (32) elastisch entlang der ersten Achse (X₂) verformbar ist, wobei die Starrheit des ersten elastischen Elements (31) gemäß der ersten Achse (X₂) geringer ist als die Starrheit des zweiten elastischen Elements (32) gemäß der ersten Achse (X₂).

9. Reflektor, der einen Rahmen (11), eine an dem Rahmen (11) befestigte flexible Membran (12), so dass es verformt werden kann, und ein Betätigungssystem (23) gemäß einem der vorherigen Ansprüche umfasst.

## Claims

1. Actuating system with which a reflector (20) can be provided and which comprises a chassis (11) and a flexible membrane (12) which is fixed to the chassis (11) so as to be able to be deformed, comprising:
• a support (231) which is capable of being fixed to the chassis (11) of the reflector (20),
• a set of deformation devices (234), each deformation device comprising a push-member element (2345) which is capable of being moved in translation relative to the support (231) along an axis (X₂), the push-member element (2345) comprising a portion which is capable of moving into contact with the flexible membrane (12) at a location (121) in order to deform it, and
• an actuating device (233) which is capable of moving in translation the push-member element (2345) of one of the deformation devices (234) at the same time along the axis (X₂) thereof,
the actuating system (23) being **characterised in that** it comprises:
• a selection device (232) which is capable of moving the actuating device (233) towards each of the deformation devices (234) so that the actuating device (233) can move in translation the push-member element (2345) of the deformation device (234) selected.

2. Actuating system according to claim 1, wherein the actuating device is capable of generating a rotation movement relative to the support (231) along the axis (X₂), the rotation movement transmitting a translation movement to the push-member element (2345) by means of a screw/nut system (2344, 2345).

3. Actuating system according to claim 2, wherein each deformation device (234) further comprises:
• a first rotational element (2341) which is capable of being moved in rotation relative to the support (231) about a second axis (X₁) which is substantially parallel with the first axis (X₂) by the actuating device (233) and
• a second rotational element (2342) which is rotatably connected about the first axis (X₂) to one of the elements of the screw/nut system (2344, 2345) and which can be moved in rotation about the first axis (X₂) by the first rotational element (2341).

4. Actuating system according to claim 3, wherein each first rotational element comprises a first pulley (2341) and each second rotational element comprises a second pulley (2342), each deformation device (234) further comprising a belt (2343) which connects the first pulley (2341) to the second pulley (2342).

5. Actuating system according to either claim 3 or claim 4, wherein the first rotational elements (2341) are distributed over the perimeter of a circle, the selection device (232) comprising a support arm (2322) which can be moved in rotation about a third axis (X₃) which extends through the centre of the circle and which is orthogonal with respect to the plane of the circle, the actuating device (233) being fixed to the support arm (2322) so as to be able to move in rotation the first rotational elements (2341) of the deformation devices (234).

6. Actuating system according to any one of claims 3 to 5, wherein the actuating device (233) comprises a motor (2331) which is capable of moving in rotation each first rotational element (2341) about its second axis (X₁).

7. Actuating system according to any one of the preceding claims, further comprising, for at least one deformation device (234), a resilient element (31) one of the ends of which is connected in terms of translation along the first axis (X₂) to the portion of the push-member element (2345) which is capable of moving into contact with the flexible membrane (12) and another of the ends of which is connected in terms of translation along the first axis (X₂) to the flexible membrane (12), the resilient element (31) being resiliently deformable in accordance with the first axis (X₂).

8. Actuating system according to claim 7, further comprising, for each deformation device (234) comprising a resilient element (31), a second resilient element (32), one of the ends of which is connected in terms of translation along the first axis (X₂) to the support (231) and another of the ends of which is connected in terms of translation along the first axis (X₂) to the flexible membrane (12), the second resilient element (32) being resiliently deformable in accordance with the first axis (X₂), the rigidity of the first resilient element (31) in accordance with the first axis (X₂) being less than the rigidity of the second resilient element (32) in accordance with the first axis (X₂).

9. Reflector comprising a chassis (11), a flexible membrane (12) which is fixed to the chassis (11) so as to be able to be deformed and an actuating system (23) according to any one of the preceding claims.
